**Europäisches Patentamt**

**European Patent Office**

**Office européen des brevets**

(11) Veröffentlichungsnummer: **0 201 473**
**B1**

(12) # EUROPÄISCHE PATENTSCHRIFT

(45) Veröffentlichungstag der Patentschrift:
10.05.89

(21) Anmeldenummer: 86850164.4

(22) Anmeldetag: 07.05.86

(51) Int. Cl.⁴: **F 28 D 1/053**, F 24 D 3/14

(54) **Strahlungs- und Konvektionsapparat.**

(30) Priorität: 09.05.85 NO 851849

(43) Veröffentlichungstag der Anmeldung:
12.11.86 Patentblatt 86/46

(45) Bekanntmachung des Hinweises auf die Patenterteilung:
10.05.89 Patentblatt 89/19

(84) Benannte Vertragsstaaten:
AT BE CH DE FR GB IT LI NL SE

(56) Entgegenhaltungen:
WO-A-84/02971
DE-A-2 254 271
DE-A-2 803 980
DE-C-951 956
DE-U-1 903 195
FR-A-2 258 610
GB-A-526 569

PATENTS ABSTRACTS OF JAPAN, Band 8, Nr. 35
(M-276) 1472 15. Februar 1984; & JP-A-58 190 632
(MATSUSHITA SEIKO K.K.) 07-11-1983

(73) Patentinhaber: Farex A/S, N-2043 Lindeberg (NO)

(72) Erfinder: Bakstad, Per, Töyenhögda 23, N-1487
Töyenhangen (NO)

(74) Vertreter: Roth, Ernst Adolf Michael, GÖTEBORGS
PATENTBYRA AB Box 5005, S-402 21 Göteborg
(SE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 201 473 B1

## Beschreibung

Die vorliegende Erfindung betrifft einen Strahlungs- und Konvektionsapparat für Unterdeckenmontage in einem Raum, bestehend aus einem Wärmetauscher, der in wärmeleitender Berührung mit vertikalen Seitenwänden eines zur Decke und nach unten, offenen, von einem Luftstrom durchströmbaren Gehäuses angeordnet ist.

## Hintergrund der Erfindung

Es ist bekannt, Räume mit in Unterdeckenpaneele verlegte Rohrleitungen mit Warmwasser zu erwärmen. Ebenso ist es bekannt, Räume mit derartigen Paneelen zu kühlen und die Wärme von der Umgebung aufnehmen. Gewöhnlich ist das Kältemedium kaltes Wasser, mit einer Temperatur von etwa 12 - 16°C. Auf Grund der Kondensierungsgefahr der Feuchtigkeit der Zimmerluft ist die Oberflächentemperatur der Rohrleitungen und der Paneele auf Temperaturwerte von 12 - 16°C begrenzt. Auch wenn in dem Raum Temperaturen von etwa 26°C vorkommen können, wird der Temperaturunterschied zwischen Raum und Paneel nur 10 - 15°C betragen und die Wärmeaufnahme verhältnismässig gering sein. Die Wärmeaufnahme ist auf etwa 80 Watt/m$^2$ Paneelfläche begrenzt. Auf Grund dieser verhältnismässig geringen Wärmeaufnahme ist der Preis für Unterdeckenpaneele pro Watt Kühleffekt relativ hoch. Meistens müssen die Paneele nach der maximalen Kühlbelastung berechnet werden.

Durch die JP-A-58 190 632 ist ein zylindrischer Wärmeapparat bekannt, in dem ein Wärmetauscher der der durch den Zylinder strömenden Luft Wärme abgibt. In dem zylindrischen Gehäuse ist ein Gebläse angeordnet, das zwangsläufig über ein oberes Filter an periferisch angeordnete Ausströmungsöffnungen abgibt.

## Zweck und wichtigste Merkmale der Erfindung

Zweck der Erfindung ist, einen Apparat der eingangs erwähnten Art zu schaffen, mit welchem es möglich ist, die Wärmeaufnahme bzw. -abgabe durch Strahlung mit direkter Kühlung bzw. Erwärmung durch Konvektion zu kombinieren. Der Apparat soll dabei platzsparend einfach und billig in der Herstellung sein.

Ein weiterer Zweck der Erfindung ist die Schaffung eines Apparates der einfach aus losen Seitenwenden baukastenartig mittels Schnappverschlüsse zusammengestellt werden kann.

Dies wurde erfindungsgemäss dadurch erreicht dass der Wärmetauscher ein Rippenrohr aufweist, dass die Seitenwände des Gehäuses mittels oberer und unterer Spannbügel zusammengehalten werden und dass das Gehäuse auf der der Decke abgewandten Seite eine Endwand aufweist, die mittels eines Schnappverschlusses an von dem Spannbügel abstehenden Flanschen auf Abstand von den unteren Endkanten der Seitenwände gehalten ist, wobei zwischen Gehäuse und Endwand Schlitze zum Durchsatz des im Wärmetauscher gekühlten Luftstromes angeordnet sind.

## Beschreibung der Zeichnungen

Die Erfindung wird im folgenden mit Hinweis auf die beigefügten Zeichnungen näher beschrieben, welche ein Ausführungsbeispiele darstellen. Es zeigen:

Figur 1 einen vertikalen Schnitt durch einen Strahlungs- und Konvektionsapparat gemäss der Erfindung,

Figur 2 einen vertikaler Schnitt durch eine Ausführungsvariante der Erfindung, die zwei zu einer Einheit zusammengesetzte Grundelemente umfasst und als kombiniertes Kühl- und Wärmeelement ausgebildet ist,

Figur 3 und 4 Schnitte durch das untere Teil eines Grundelementes, das mit einer Verzierungsleiste bzw. einer Beleuchtungsarmatur versehen ist,

Figur 5 einen mit Fig. 1 analogen Schnitt einer erfindungsgemässen Ausführungsvariante mit doppelten Rippenrohren, und

Figur 6 eine schaubildliche Ansicht des in Fig. 1 veranschaulichten Apparates.

## Beschreibung der Ausführungsbeispiele

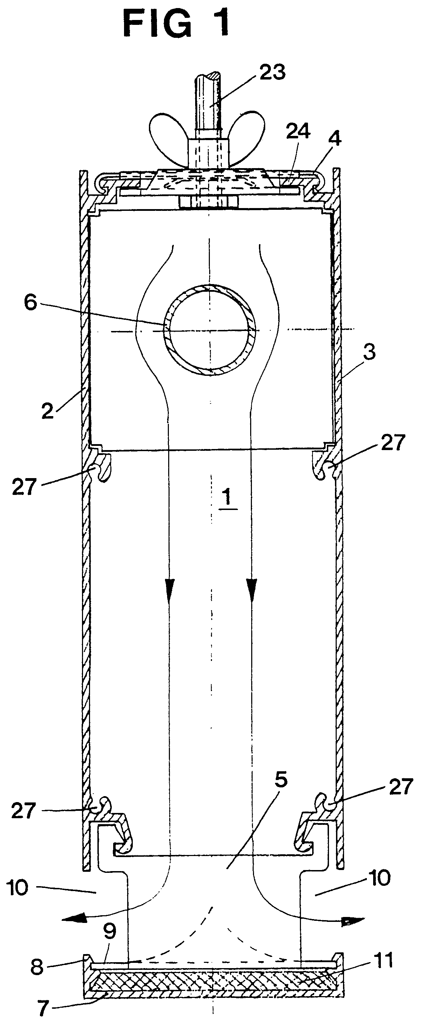

In Figur 1 wird ein aus Leichtmetallprofilen zusammengestelltes, oben und unten offenes Gehäuse 1 veranschaulicht, dessen Seitenwände 2 und 3 mittels oberen und unteren Spannbügel 4 und 5 zusammengehalten werden. Ein Wärmeaustauscher in Form einer Rippenrohrbatterie 6 für ein Kühlmedium ist in wärmeleitendem Kontakt mit den Seitenwänden 2 und 3 angeordnet, welche von den Spannbügeln 4 und 5 gegen die Rippenrohrbatterie 6 gehalten werden.

Das Gehäuse 1 weist weiter eine untere Endwand 7 auf, die mittels Schnappverschlüsse 8 mit von den unteren Spannbügeln 5 abstehenden Flanschen 9 auf Abstand von den unteren Endkanten der Seitenwände 2 und 3 verbunden ist. Luft aus dem Raum kann somit durch das Gehäuse 1 längs dessen ganzer Länge hindurchpassieren und von der Rippenrohrbatterie 6 gekühlt werden, wonach die gekühlte Luft durch die Schlitze 10, die zwischen den unteren Kanten der Seitenwände 2 und 3 und der Endwand 7 vorgesehen sind, abgeht. Der Apparat fungiert somit als Strahlungs- und Konvektionsapparat. Die Endwand 7 ist trogförmig ausgebildet und in dieser kann eine wasserabsorbierende Matte 11 zur Aufnahme von eventuellem Kondenswasser angeordnet sein.

Aufhängevorrichtungen 23 in Form von Pendeln für das Apparategehäuse 1 sind an Anschlussflansche 24 und Spannbügel 4 an den oberen Endkanten der Seitenwände 2 und 3 angeschlossen.

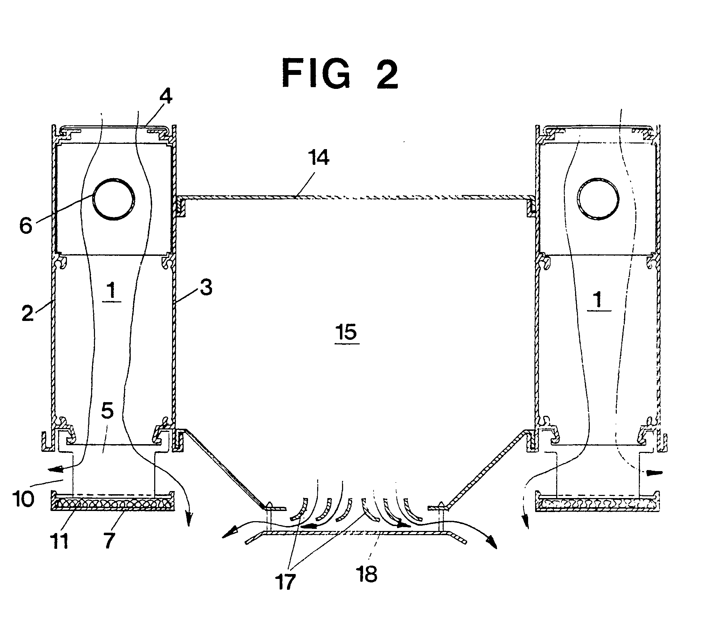

In dem in Fig 2 dargestellten Ausführungsbeispiel sind zwei Gehäuse 1 auf Abstand voneinander vorgesehen, die über eine Unterdeckenpaneel 18 sowie eine obere Abdeckplatte 14 verbunden sind. Der Raum zwischen zwei Apparaten 1, das dem Unterdeckenpaneel 18 und der Abdeckplatte 14 bildet einen Ventilationskanal 15, durch welchen das Zimmer über ein nicht näher dargestelltes Gebläse mit Zuluft gespeist wird. Die Zuluft wird von Leitschaufeln 17 verteilt, unterhalb welchen und im Abstand zu denen eine Abschirmung 18 angeordnet ist. Die Passage zwischen den Leitschaufeln 17 und dem Paneel 18 wirkt als Induktionsdüse wodurch eine verstärkte Induktion in den Apparategehäusen erreicht wird.

Die Konvektionsströmungen durch das Gehäuse 1 werden in sämtlichen Beispielen durch die Temperatur des Kühlmediums bzw. Wärmemediums gesteuert. Je grösser die Luftdifferenz zwischen der Luft in dem Raum und dem Kühl- bzw. Wärmemedium ist, desto grösser werden die Konvektionsströmungen sein.

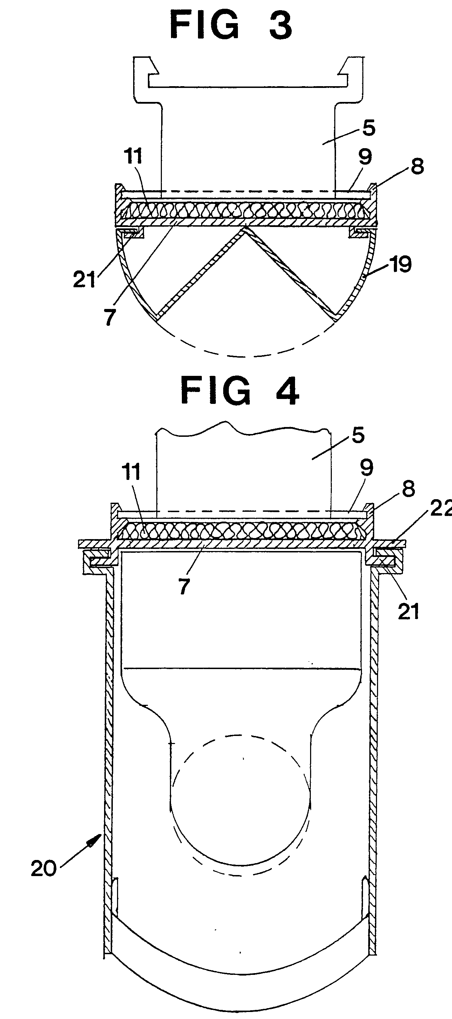

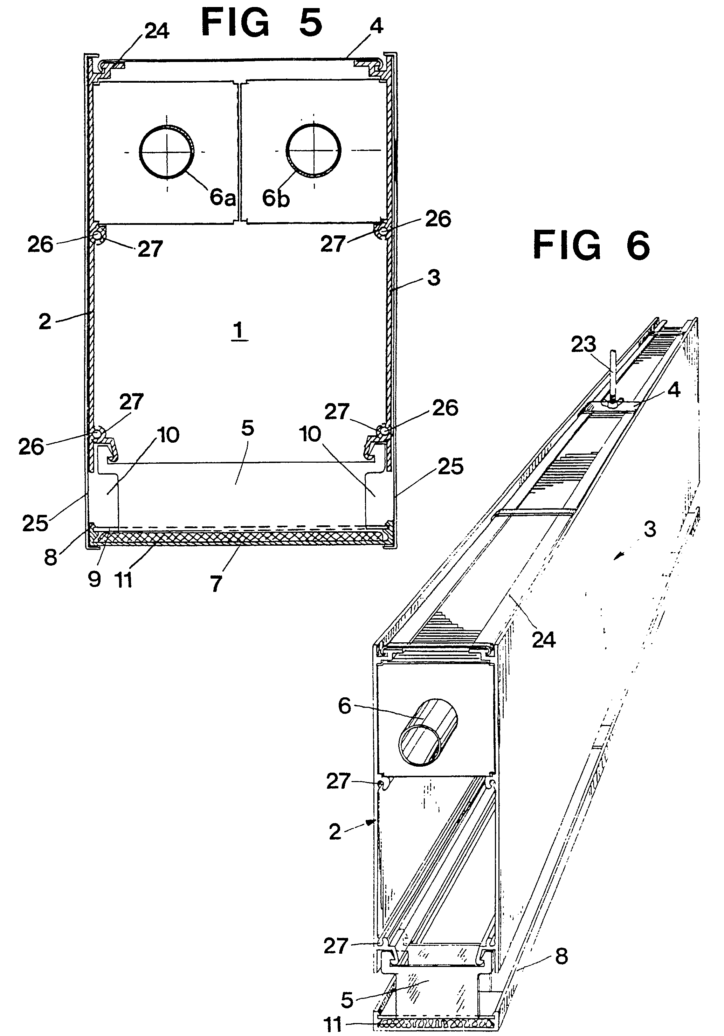

In den Figuren 4 und 5 wird der Anschluss einer Verzierungsleiste 19, bzw. einer Beleuchtungsarmatur 20 an der Unterseite der Endwand 7 veranschaulicht. Die Endwand ist mit Verbindungsflanschen 21 für den Anschluss der Leisten bzw. der Armatur versehen. Diese Verbindungsflansche 21 können auf verschiedene Weise angeordnet sein, wie in Fig. 4 und 5 veranschaulicht ist, in Abhängigkeit davon, ob das Gehäuse 1 für den Anschluss an ein Unterdeckenpaneel 12 vorbereitet ist oder nicht. Im ersteren Fall ist die Endwand 7 mit einem weiteren Verbindungsflansch 22 versehen, der als Auflagefläche für das Unterdeckenpaneel 12 dient, wobei die Anschlussglieder der Leiste 19 bzw. der Armatur 20 in Nuten zwischen den Verbindungsflanschen 21, 22 aufgenommen werden.

In der Ausführungsbeispiel nach Fig. 6 sind in dem Gehäuse 1 zwei Rippenrohre 6a und 6b nebeneinander angeordnet, wobei die Durchflussrohre an dem einen Ende des Gehäuses 1 über einen Rohrbogen miteinander verbunden sind. Diese Ausführung erlaubt es, den Apparate nur von einer Endseite zu speisen und die beiden Rippenrohre als Hin- und Rücklauf anzuwenden.

In Fällen, wo ein Endabschluss erwünscht ist, kann an einem oder beiden Stirnenden ein Endblech 25 festgeschraubt sein, dessen Schrauben 26 in dafür vorgesehene offene Rillen 27 einschraubbar sind.

**Patentansprüche**

1. Strahlungs- und Konvektionsapparat für die Unterdeckenmontage in einem Raum, bestehend aus einem Wärmetauscher (6) der in wärmeleitender Berührung mit vertikalen Seitenwänden (2, 3) eines zur Decke und nach unten offenen, von einem Luftstrom durchströmbaren Gehäuses (1) angeordnet ist, dadurch gekennzeichnet, dass der Wärmetauscher (6) ein Rippenrohr aufweist, dass die Seitenwände (2, 3) des Gehäuses (1) mittels oberer und unterer Spannbügel (4, 5) zusammengehalten werden und dass das Gehäuse auf der der Decke abgewandten Seite eine Endwand (7) aufweist, die mittels eines Schnappverschlusses (8) an von dem Spannbügel (5) abstehenden Flanschen (9) auf Abstand von den unteren Endkanten der Seitenwände (2, 3) gehalten ist, wobei zwischen Gehäuse und Endwand Schlitze (10) zum Durchsatz des im Wärmetauscher gekühlten Luftstromes angeordnet sind.

2. Apparat nach Anspruch 1 dadurch gekennzeichnet, dass der Wärmetauscher zwei Rippenrohre (6a, 6b) aufweist, die nebeneinander innerhalb des Gehäuses (1) angeordnet und an dem einen Ende des Gehäuses (1) miteinander verbunden sind und den Hin- und Rücklauf des Apparates bilden.

3. Apparat nach Anspruch 1 oder 2, dadurch gekennzeichnet, dass die Endwand (7) als Halterung für eine flüssigkeitsaufsaugende Matte (11) ausgebildet ist.

4. Apparat nach einem oder mehreren der obigen Ansprüche dadurch gekennzeichnet, dass die Endwand (7) mit Verbindungsflanschen (21) für den Anschluss von Armaturen (20) oder Verzierungsleisten (19) ausgebildet ist.

**Claims**

1. A radiation- and convection device arranged below the ceiling in a room and comprising a heat exchanger (6), which is in heatconducting contact with vertical side walls (2, 3) of a housing (1) which is open to the ceiling and downwardly and through which an air stream can flow, characterized in, that the heat exchanger (6) is provided with a finned tube, that the sidewalls (2, 3) of the housing (1) are held together by upper and lower clamps (4, 5) and that the housing on the side facing away from the ceiling is provided with an end wall (7), which is kept at a distance from the lower end edges of the side walls (2, 3) by means of a snap lock (8) on flanges (9) projecting from the clamps (5), at which slits (10) are provided between the housing and end wall for passage of the air stream cooled in the heat exchanger.

2. A device claimed in claim 1, characterized in, that the heat exchanger is provided with two finned tubes (6a, 6b), which are arranged after each other inside the housing (1) and are connected with each other at one end of the housing (1) and form the in- and outlet passages of the device.

3. A device as claimed in claim 1 or 2, characterized in, that the end wall (7) is designed as holding means for a liquid absorbing mat (11).

4. A device as claimed in any of the preceding claims, characterized in, that the end wall (7) is provided with connection flanges (21) for attachment of fittings (20) or decorating borders (19).


## Revendications

1. Appareil à rayonnement et à convection, pour la pose au faux plafond d'une pièce, se composant d'un échangeur de chaleur (6), qui est disposé en contact de conduction de chaleur avec des parois latérales verticales (2, 3) d'un boîtier (1), apte à être traversé par un courant d'air, ouvert vers le plafond et vers le bas, caractérisé par le fait que l'échangeur de chaleur (6) présente un tube à ailettes, que les parois latérales (2, 3) du boîtier (1) sont maintenues ensemble au moyen d'étriers de tension (4, 5) supérieurs et inférieurs, et que le boîtier présente, sur le côté opposé au plafond, une paroi d'extrémité (7), qui est maintenue, au moyen d'une fermeture encliquetable (8), sur des brides (9) s'écartant de l'étrier de tension (5), à distance des bords d'extrémité inférieurs des parois latérales (2, 3), des fentes (10) étant disposées entre boîtier et paroi d'extrémité pour le passage du courant d'air refroidi dans l'échangeur de chaleur.

2. Appareil selon la revendication 1, caractérisé par le fait que l'échangeur de chaleur présente deux tubes à ailettes (6a, 6b), qui sont disposés l'un à côté de l'autre à l'intérieur du boîtier (1), et qui sont reliés l'un a l'autre à l'une des extrémités du boîtier (1) et forment le circuit aller et le circuit retour de l'appareil.

3. Appareil selon l'une des revendications 1 ou 2, caractérisé par le fait que la paroi d'extrémité (7) est réalisée sous la forme d'une fixation pour un mat (11) absorbant les liquides.

4. Appareil selon l'une ou plusieurs des revendications précédentes, caractérisé par le fait que la paroi d'extrémité (7) est réalisée avec des brides d'assemblage (21) pour le raccordement d'armatures (20) ou de baguettes décoratives (19).

EP 0 201 473 B1

# FIG 1

1

# FIG 2

# FIG 3

# FIG 4

# FIG 5

# FIG 6